# EUROPÄISCHE PATENTANMELDUNG

(11) **EP 2 287 498 A1**
(43) Veröffentlichungstag der Anmeldung: **23.02.2011**
(21) Anmeldenummer: 09173136.4
(22) Anmeldetag: 15.10.2009
(51) Int. Cl.: F16J 15/08

(54) **Verfahren zur Herstellung einer Dichtung**

(30) Priorität: 18.08.2009 DE 102009028628
(71) Anmelder: Linde Aktiengesellschaft, 80331 München (DE)
(72) Erfinder: Heinrich, Peter, 82110, Germering (DE); Krömmer, Werner, 84034, Landshut (DE); Sager, Jens, 23730, Neustadt (DE); Babbe, Andreas, 23747, Dahme (DE)
(74) Vertreter: Kudlek & Grunert Patentanwälte

(57) **Zusammenfassung**

In einem Verfahren zur Herstellung einer Dichtung zwischen einem ersten (10, 30) und einem zweiten (20, 31) Bauteil, insbesondere einer Zylinderkopfdichtung für einen Verbrennungsmotor (200) wird eine Dichtungsmaterial in Form wenigstens eines Materialsteges (13, 32, 32', 32'', 32"') durch ein Spritzverfahren auf das erste (10, 30) und/oder das zweite (20, 31) Bauteil aufgebracht. Eine entsprechende Dichtung sowie ein entsprechender Verbrennungsmotor werden ebenfalls vorgeschlagen.

## Beschreibung

Die Erfindung betrifft ein Verfahren zur Herstellung einer Dichtung zwischen einem ersten Bauteil und einem zweiten Bauteil, insbesondere einer Zylinderkopfdichtung für einen Verbrennungsmotor, eine entsprechende Dichtung sowie einen entsprechenden Verbrennungsmotor.

Verbrennungsmotoren weisen Dichtungen in unterschiedlichen Varianten und aus unterschiedlichen Werkstoffen auf. Insbesondere der Zylinderkopfdichtung kommt in modernen Motoren eine wichtige Bedeutung zu. Sie dient zur Abdichtung der Brennräume, der Kühlmittelbereiche und der Öldurchgänge, wirkt jedoch insbesondere auch als Kraftübertragungsglied zwischen Zylinderkopf und Kurbelgehäuse. Hieraus resultiert ein erheblicher Einfluss der Zylinderkopfdichtung auf die Kraftverteilung innerhalb des Motors und auf die durch auftretende Kräfte bewirkten elastischen Bauteilverformungen.

Moderne Motoren besitzen aufgrund steigender Verbrauchs- und Emissionsanforderungen häufig gewichtsoptimierte Motorkonstruktionen und höhere Zünddrücke. Aufgrund einer zur Gewichtsoptimierung vorgenommenen Verringerung der Wandstärken der Motorkomponenten sowie der Verwendung von Leichtmetall ist dabei mit einer verringerten Bauteilsteifigkeit zu rechnen.

Zur Minimierung in Folge auftretender sogenannter Zylinderverzüge, die sich nachteilig auf das Abgasverhalten auswirken können, wird eine Reduzierung der Schraubenkräfte (Verspannkräfte) im Motor angestrebt. Hieraus ergeben sich jedoch umgekehrt erhöhte Belastungen in Form sogenannter dynamischer Dichtspaltschwingungen.

Aus diesen Gründen werden immer höhere Anforderungen an die Festigkeit, Dichtigkeit und Dauerhaltbarkeit von Zylinderkopfdichtungen gestellt.

Im Stand der Technik sind unterschiedliche Arten von Zylinderkopfdichtungen bekannt, darunter sogenannte Ferrolastic-Weichstoff-, Metall-Elastomer- und Metalllagen-Dichtungen. Einen Überblick hierzu gibt beispielsweise Basshuysen/Schäfer (Hrsg.): "Handbuch Verbrennungsmotor", 2. Auflage, Vieweg-Verlag, 2002, S. 272 - 278.

Die Herstellung von Zylinderkopfdichtungen ist aufgrund der hierzu erforderlichen Werkzeuge und Materialien häufig aufwändig und mit hohen Herstellungskosten verbunden. Zudem weisen herkömmliche Zylinderkopfdichtungen häufig Nachteile aufgrund der erforderlichen hohen Schraubenkräfte, der nicht ausreichenden Dichtwirkung und/oder der mangelnden Korrosionsbeständigkeit bzw. Dauerstabilität auf.

Zur Herstellung von Beschichtungen und Werkstücken aus Metall sind Spritzverfahren wie Flamm-, Plasma- und Kaltgasspritzen bekannt.

Insbesondere das Kaltgasspritzen, wie es beispielsweise in der EP 0 484 533 B1 beschrieben ist, bietet dabei eine Reihe von Vorteilen. Beim Kaltgasspritzen werden Spritzpartikel mit einer Partikelgröße von 1 bis 100 µm in einem Trägergas durch Entspannung in einer Laval-Düse auf hohe Geschwindigkeiten beschleunigt. Die Temperatur des vergleichsweise kalten Trägergases liegt unter der Schmelztemperatur der Spritzpartikel. Die plastische Verformung der mit hoher kinetischer Energie auftreffenden Partikel und die daraus resultierende lokale Wärmefreigabe sorgen für eine sehr gute Dichtigkeit, Kohäsion und Haftung der gespritzten Schicht auf dem Werkstück. Aufgrund der relativ niedrigen Temperaturen und der Möglichkeit, Inertgase als Trägergas zu nutzen, lassen sich Oxidation und/oder Phasenumwandlungen des Beschichtungswerkstoffes beim Kaltgasspritzen vermeiden.

Die DE 10 2006 057 839 A1 offenbart einen Zylinder für einen Verbrennungsmotor, dessen Innendurchmesser im Bereich oberhalb des oberen Ringumkehrpunktes eines im Zylinder axial hin und her geführten Kolbens eine Verengung aufweist. Es ist vorgesehen, dass die Verengung als auf der Lauffläche des Zylinders im Bereich des oberen Umkehrpunkts aufgebrachter Materialauftrag ausgebildet ist.

Die US 2006/0207094 A1 offenbart entsprechende Dichtungen für Gasturbinenkompressoren, bei denen ein Labyrinthdichtungselement durch eine kaltgasgespritzte Abrasivdichtung ersetzt wird.

Die aus dem Stand der Technik bekannten, durch Spritzverfahren hergestellten Schichten sind jedoch aufgrund der besonderen Anforderungen dieses Einsatzgebietes nicht zur Verwendung als Zylinderkopfdichtungen geeignet, da sie Verschleiß unterliegen und/oder die erforderliche hohe Abdichtwirkung nicht erzielen.

Es besteht daher ein Bedarf nach verbesserten Dichtsystemen, insbesondere zur Verwendung als Zylinderkopfdichtungen in Verbrennungsmotoren.

Der Erfindung liegt somit die Aufgabe zugrunde, Dichtungen mit verbesserten Eigenschaften einfach und kostengünstig herzustellen.

### Offenbarung der Erfindung

Die erfindungsgemäße Aufgabe wird gelöst durch ein Verfahren, eine Dichtung sowie einen Verbrennungsmotor mit den Merkmalen der unabhängigen Patentansprüche. Bevorzugte Ausgestaltungen sind in den jeweiligen abhängigen Ansprüchen angegeben.

Die Erfindung beinhaltet die technische Lehre, zur Herstellung einer entsprechenden Dichtung ein Dichtungsmaterial in Form wenigstens eines Materialstegs durch ein Spritzverfahren direkt auf ein erstes und/oder ein zweites Bauteil aufzubringen.

Bevorzugt wird bei vorliegender Erfindung zumindest eine der Komponenten durch Kaltgasspritzen, Flammspritzen, insbesondere Hochgeschwindigkeitsflammspritzen (HVOF), und/oder Plasmaspritzen gespritzt.

Durch die genannten Maßnahmen lassen sich signifikant verbesserte Eigenschaften der hierdurch hergestellten Dichtungen erzielen. Die entsprechenden Produkte weisen eine erhöhte Dichtwirkung, eine bessere Dauerhaltbarkeit sowie bessere Kraftübertragungseigenschaften auf.

Vorzugsweise wird im Rahmen des vorliegenden Verfahrens das Dichtungsmaterial als Materialsteg in einer Breite von 0,5 bis 5 mm, vorzugsweise in einer Breite von 1 bis 4 mm aufgebracht. Durch die relativ schmalen Stegbreiten bei gleichzeitig verbesserten Eigenschaften des Dichtungsmaterials kann die für eine gute Dichtwirkung erforderliche Verspannkraft (Schraubenkraft) auf ein Minimum reduziert werden. Insbesondere in Leichtbau-Motorkonstruktionen mit geringen Wandstärken können hierdurch Zylinderverzüge sicher vermieden werden.

Vorzugsweise wird das Dichtungsmaterial als Materialsteg in einer Schichtdicke von 0,2 bis 2 mm, vorzugsweise von 0,5 bis 1,5 mm aufgebracht. Durch geeignete Auswahl der Schichtdicke kann die Dichteigenschaft der hergestellten Dichtung vorteilhaft beeinflusst werden.

Je nach Materialeigenschaften können sich halbkreisförmige, dreieckige oder viereckige Querschnitte von entsprechend hergestellten Dichtungsmaterialstegen als vorteilhaft erweisen. Beispielsweise kann durch einen dreieckigen Querschnitt, bei dem eine vorstehende Materialkante in ein gegenüberliegendes Material einschneidet, durch einen Schneidringeffekt eine nochmals verbesserte Dichtwirkung erzielt werden. Rechteckige Querschnitte, bei denen ein weiches Material verwendet wird, das sich durch den Kontakt mit dem gegenüberliegenden Bauteil in seiner Form anpasst, eigenen sich hingegen beispielsweise zum Herstellen von Dichtungen mit relativ großer Kontaktfläche.

Es kann auch vorgesehen sein, das Dichtungsmaterial in Form mehrerer Materialstege auf das erste und/oder das zweite Bauteil aufzubringen. Hierdurch kann insbesondere neben der entsprechenden Dichtwirkung auch eine Kraftübertragung zwischen den wechselseitig abgedichteten Bauteilen beeinflusst werden. Es kann vorgesehen sein, mehrere Materialstege aus unterschiedlichen Materialien, mit unterschiedlichen Materialeigenschaften und/oder mit unterschiedlichen Stegbreiten und/oder Schichtdicken vorzusehen, so dass unterschiedliche Dichtungsmaterialstege spezifische Dicht- bzw. Kraftübertragungsfunktionen wahrnehmen können.

Besonders vorteilhaft kann ein Dichtungsmaterial verwendet werden, das eine andere Härte aufweist als ein Material des ersten und/oder des zweiten Bauteils. Durch ein hartes Dichtungsmaterial kann bei geeigneter Ausbildung des Querschnitts des Materialstegs beispielsweise ein Schneidringeffekt erzielt werden, bei dem das Dichtungsmaterial in das gegenüberliegende Bauteil einschneidet. Wird ein vergleichsweise weiches Dichtungsmaterial verwendet, ist es möglich, das Dichtungsmaterial selbst etwa an Materialunebenheiten anzupassen.

Je nach der zu erzielenden Dichtwirkung kann beispielsweise ein aluminium-, kupfer- und/oder nickelhaltiges Material verwendet werden. Aluminiumhaltige Materialien oder Aluminium als Reinstoff kann verwendet werden, wenn eine weiche und entsprechend flexible Dichtung herzustellen ist.

Diese kann beispielsweise zur Abdichtung der niedrige Drücke aufweisenden Kühlmittelkanäle verwendet werden. Kupfer kann dann zum Einsatz kommen, wenn eine verbesserte Dichtwirkung bei höheren Drücken, wie etwa zur Abdichtung von Brennräumen, erzielt werden soll. Nochmals verbesserte Dichtwirkungen können durch nickelhaltiges Material (Nickel oder ein entsprechender Nickel-Grundwerkstoff) erzielt werden, insbesondere wenn eine nickelhaltige Dichtung in Form einer zuvor erläuterten Schneidringdichtung verwendet wird.

Die Dichtwirkung kann mit besonderem Vorteil dadurch unterstützt werden, dass ferner auf dem ersten und/oder dem zweiten Bauteil ein Steg und/oder eine Nut bereitgestellt wird. Ein Steg kann beispielsweise dazu verwendet werden, eine Schneidwirkung auf eine durch Kaltgasspritzen hergestellte (weiche) Dichtung zu erzeugen. Hingegen kann eine Nut in einem der abzudichtenden Materialien vorgesehen sein, um hierdurch eine verbesserte Haftwirkung des aufgespritzten Materials und/oder eine definierte Kraftverteilung bzw. -ableitung zu erzielen. Befindet sich der dichtende Materialsteg auf dem ersten Bauteil, ist es folglich vorteilhaft, den Steg auf dem zweiten Bauteil gegenüber dem Materialsteg vorzusehen und/oder die Nut auf dem ersten Bauteil im Bereich des Materialstegs vorzusehen.

Ein Verfahren zur Herstellung einer Dichtung weist ferner vorteilhafterweise den Schritt auf, das erste und das zweite Bauteil mit einer Verspannkraft zu verspannen. Die Verspannkraft kann dosiert an die jeweilige Dichtaufgabe und an das verwendete Dichtungsmaterial angepasst werden.

Vorzugsweise werden im Rahmen der vorliegenden Erfindung Verspannkräfte von 5 bis 200 kN, insbesondere 10 bis 90 kN, verwendet.

Eine erfindungsgemäß hergestellte Dichtung, insbesondere eine Zylinderkopfdichtung für einen Verbrennungsmotor sowie ein Verbrennungsmotor mit einer Zylinderkopfdichtung, die entsprechend dem erfindungsgemäßen Verfahren hergestellt wird, ist ebenfalls Gegenstand der Erfindung. Bezüglich der Merkmale und Vorteile entsprechender Dichtungen und Motoren sei ausdrücklich auf die zuvor erläuterten Vorteile des erfindungsgemäßen Verfahrens verwiesen.

Die Erfindung und ihre Vorteile sowie weitere Ausgestaltungen der Erfindung werden im Folgenden anhand der in den Figuren dargestellten Ausführungsbeispiele näher erläutert. Im Einzelnen zeigt:
- Figur 1: einen Verbrennungsmotor gemäß Stand der Technik in schematischer Darstellung,
- Figur 2: einen Verbrennungsmotor mit einer Dichtung gemäß einer besonders bevorzugten Ausführungsform der Erfindung in schematischer Darstellung, und
- Figur 3: Detailansichten entsprechend besonders bevorzugter Ausführungsformen der Erfindung hergestellter Dichtungen in schematischer Darstellung.

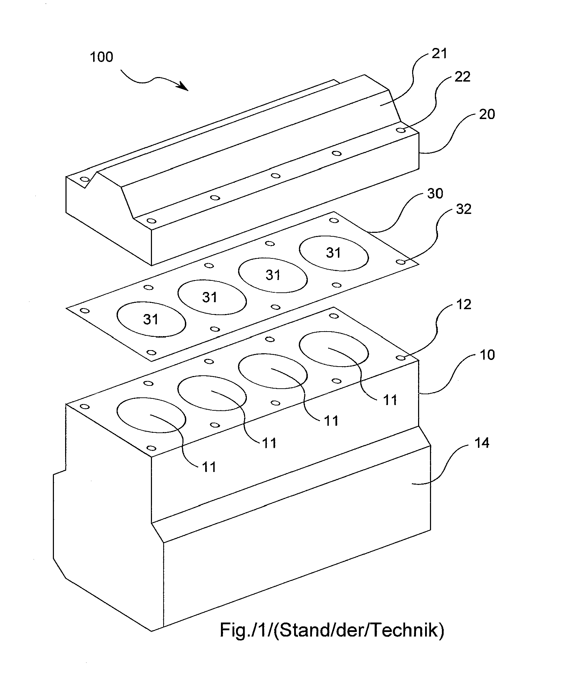

In Figur 1 ist ein Verbrennungsmotor gemäß Stand der Technik schematisch dargestellt und insgesamt mit 100 bezeichnet. Der Verbrennungsmotor 100 weist einen Motorblock 10 und einen Zylinderkopfdeckel 20 auf. Weitere mechanische Elemente des Motorblocks 10 und des Zylinderkopfdeckels 20, wie beispielsweise ein Kurbelgehäuse 14 und ein Nockenwellengehäuse 21, sind schematisiert dargestellt und der Einfachheit halber nicht weiter ausgeführt.

Im Motorblock 14 sind Zylinder bzw. Brennräume 11 vorgesehen. Der vorliegende Motor ist als Vierzylindermotor ausgebildet. Zwischen Motorblock 10 und Zylinderkopfdeckel 20 ist eine Zylinderkopfdichtung 30 üblicher Bauart vorgesehen. Der Motorblock 10 und der Zylinderkopfdeckel 20 werden über geeignete Schraubengewinde bzw. Bohrungen 12, 22, 32 mittels Schrauben aneinander befestigt und miteinander verspannt. Im Bereich der Zylinder 11 weist die Zylinderkopfdichtung 30 passende Brennraumaussparungen 31 auf. Ferner können Aussparungen für Öldurchgänge und dergleichen vorgesehen sein, die jedoch der Einfachheit halber nicht dargestellt sind.

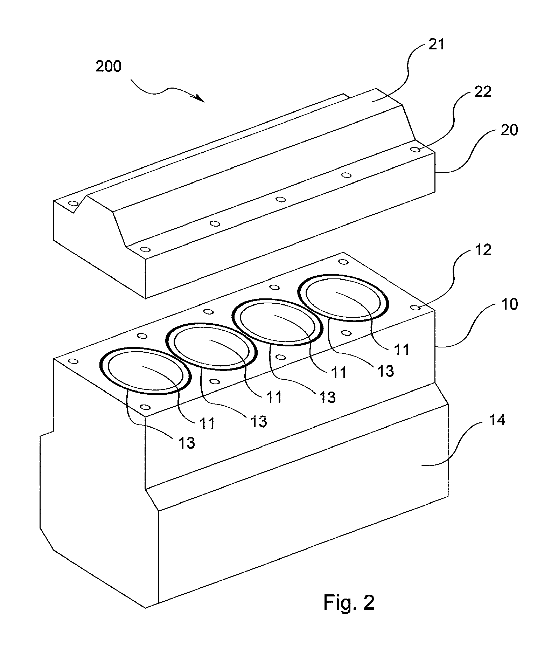

Figur 2 zeigt, insgesamt mit 200 bezeichnet, einen Verbrennungsmotor gemäß einer besonders bevorzugten Ausführungsform der vorliegenden Erfindung. Identische oder gleich wirkende Elemente sind mit den gleichen Bezugszeichen wie in Figur 1 bezeichnet. Beim Verbrennungsmotor 200 ist keine Zylinderkopfdichtung herkömmlicher Art vorgesehen. Stattdessen weist der Motorblock 10 Materialstege 13 aus Dichtungsmaterial auf, die erfindungsgemäß durch ein Spritzverfahren aufgebracht sind. Es sei zu verstehen gegeben, dass die Dichtungsmaterialstege 13 im Rahmen des erfindungsgemäßen Verfahrens sowohl motorblockseitig als auch zylinderkopfdeckelseitig vorgesehen sein können.

Entsprechend kann auch vorgesehen sein, sowohl auf dem Zylinderkopfdeckel 20 als auch auf dem Motorblock 10 geeignete Materialstege vorzusehen. Durch eine Verspannung des Motorblocks 10 mit dem Zylinderkopfdeckel 20 über die Schraubengewinde bzw. Bohrungen 22 kann durch eine Verspannkraft, die auf die Dichtungsmaterialstege 13 wirkt, eine Abdichtung der Zylinder 11 erzielt werden.

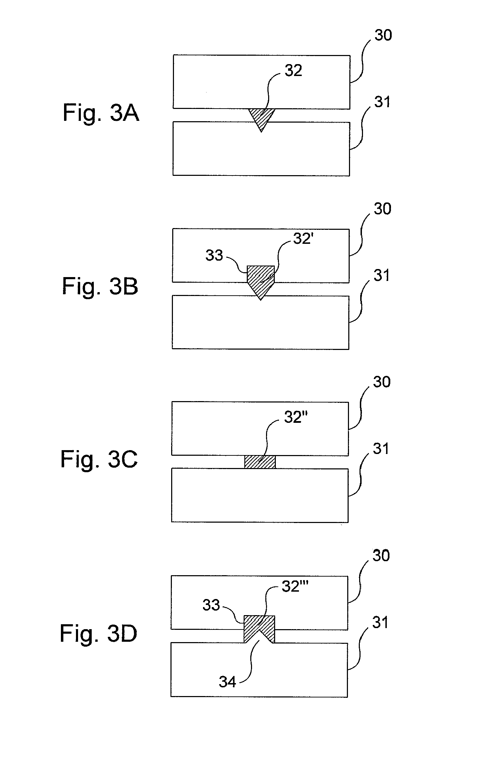

Die Teilfiguren 3A bis 3D der Figur 3 zeigen jeweils Detailansichten erfindungsgemäß hergestellter Dichtungsmaterialstege 32, 32', 32", 32"'. Hierbei ist ein entsprechender Materialsteg jeweils auf einem ersten Bauteil 30 aufgebracht, welches auch als sogenanntes aktives Bauteil bezeichnet wird. Dem aktiven Bauteil 30 gegenüberliegend ist ein sogenanntes passives Bauteil 31 angeordnet.

In Figur 3A ist ein Materialsteg 32 mit einem dreieckigen Querschnitt auf dem aktiven Bauteil 30 aufgebracht. Aufgrund der ausgebildeten Materialstegkante des Materialstegs 32 kann eine Schneidringwirkung einer entsprechenden Dichtung erzielt werden, wenn das für den Materialsteg 32 verwendete Material eine größere Härte als das passive Bauteil 31 aufweist. Hierdurch wird eine dauerhafte und sichere Abdichtung erzielt. Der Einschnitt des Materialstegs 32 kann entweder ausschließlich durch die aufgewandten Verspannkräfte bewirkt sein oder es kann eine zusätzliche, in dem passiven Bauteil 31 eingefräste oder eingegossene Nut vorgesehen sein.

In Figur 3B ist zusätzlich in dem aktiven Bauteil 30 eine Materialnut 33 ausgebildet. Die Nut ist vollständig mit dem Dichtungsmaterial gefüllt. Das Dichtungsmaterial ragt zudem über die Oberfläche des aktiven Bauteils 30 hinaus, wodurch ein Materialsteg 32' gebildet wird. Durch die vorgesehene Nut kann eine besondere Haftwirkung des Dichtungsmaterials an dem aktiven Bauteil 30 erzielt werden. Ferner ermöglicht die relativ große Materialmenge bei entsprechenden elastischen Eigenschaften eine elastische Dämpfung von Vibrationen oder eine verbesserte Abführung von Kräften.

In Figur 3C ist ein Materialsteg 32" mit einem rechteckigen Querschnitt dargestellt. Durch den rechteckigen Querschnitt und die damit verbundene relativ große Auflagefläche kann eine nochmals verbesserte Dichtwirkung erzielt werden. Wird ein Material mit geringerer Härte verwendet werden, welches durch eine Verspannung des aktiven 30 mit dem passiven 31 Bauteil eine laterale Ausdehnung erfährt, kann eine flexible Anpassung an Materialunebenheiten sowie ein Höhenausgleich bei Materialtoleranzen bewirkt werden.

In Figur 3D ist das passive Bauteil 31 zusätzlich mit einem Materialsteg 34 versehen, der seinerseits eine Schneidringwirkung auf einen Materialsteg 33"' aus Dichtungsmaterial ausübt. Die Dichtwirkung ist auch hierdurch nochmals verbessert. Es sei zu verstehen gegeben, dass auch Materialsteg 34 durch ein entsprechendes Spritzverfahren hergestellt sein kann, bei dem beispielsweise ein härteres Material als jenes des Materialstegs 32"' verwendet wird. Alternativ kann der Materialsteg 34 während eines Gussverfahrens zur Herstellung eines Motorblocks oder eines Zylinderkopfdeckels hergestellt werden.

## Patentansprüche

1. Verfahren zur Herstellung einer Dichtung zwischen einem ersten Bauteil (10, 30) und einem zweiten Bauteil (20, 31), insbesondere einer Zylinderkopfdichtung für einen Verbrennungsmotor (200), **dadurch gekennzeichnet, dass** ein Dichtungsmaterial in Form wenigstens eines Materialstegs (13, 32, 32', 32", 32"') durch ein Spritzverfahren auf das erste (10, 30) und/oder das zweite (20, 31) Bauteil aufgebracht wird.

2. Verfahren nach Anspruch 1, **dadurch gekennzeichnet, dass** als Spritzverfahren Kaltgas-, Flamm- und/oder Plasmaspritzen verwendet wird.

3. Verfahren nach Anspruch 1 oder 2, **dadurch gekennzeichnet, dass** Dichtungsmaterial als Materialsteg (13, 32, 32', 32", 32"') in einer Breite von 0,5 bis 5 mm, vorzugsweise in einer Breite von 1 bis 4 mm aufgebracht wird.

4. Verfahren nach einem der vorstehenden Ansprüche, **dadurch gekennzeichnet, dass** das Dichtungsmaterial als Materialsteg (13, 32, 32', 32", 32"') in einer Schichtdicke von 0,2 bis 2mm, vorzugsweise in einer Schichtdicke von 0,5 bis 1,5mm aufgebracht wird.

5. Verfahren nach einem der vorstehenden Ansprüche, **dadurch gekennzeichnet, dass** der Materialsteg (13, 32, 32', 32", 32"') mit einem halbkreisförmigen, dreieckigen oder viereckigen Querschnitt aufgebracht wird.

6. Verfahren nach einem der vorstehenden Ansprüche, **dadurch gekennzeichnet, dass** das Dichtungsmaterial in Form mehrerer Materialstege (13, 32, 32', 32", 32"') auf das erste (10, 30) und/oder das zweite (20, 31) Bauteil aufgebracht wird.

7. Verfahren nach einem der vorstehenden Ansprüche, **dadurch gekennzeichnet, dass** als Dichtungsmaterial ein Material verwendet wird, das eine andere Härte aufweist als ein Material des ersten (10, 30) und/oder des zweiten (20, 31) Bauteils.

8. Verfahren nach einem der vorstehenden Ansprüche, **dadurch gekennzeichnet, dass** als Dichtungsmaterial ein aluminium-, kupfer- und/oder nickelhaltiges Material verwendet wird.

9. Verfahren nach einem der vorstehenden Ansprüche, **dadurch gekennzeichnet, dass** ferner auf dem ersten (10, 30) und/oder dem zweiten (20, 31) Bauteil ein Steg (34) und/oder eine Nut (33) bereitgestellt wird.

10. Verfahren nach einem der vorstehenden Ansprüche, **dadurch gekennzeichnet, dass** nach dem Aufbringen des Materialstegs (13, 32, 32', 32", 32"') das erste (10, 30) und zweite Bauteil (20, 31) mit einer Verspannkraft verspannt werden.

11. Verfahren nach Anspruch 10, **dadurch gekennzeichnet, dass** eine Verspannkraft von 5 bis 200 kN, vorzugsweise von 10 bis 90 kN verwendet wird.

12. Dichtung (13, 32, 32', 32", 32"'), insbesondere Zylinderkopfdichtung, die durch ein Verfahren gemäß einem der vorstehenden Ansprüche hergestellt ist.

13. Verbrennungsmotor (200) mit einer Zylinderkopfdichtung (13, 32, 32', 32", 32"') gemäß Anspruch 12.
